# EUROPEAN PATENT SPECIFICATION

(11) **EP 3 234 739 B1**
(45) Date of publication and mention of the grant of the patent: **15.09.2021**
(21) Application number: 15870573.1
(22) Date of filing: 17.11.2015
(51) Int. Cl.: G06F 21/31, H04W 12/50, G06T 15/00, G06T 19/00, G02B 27/01, H04W 12/06, G06F 3/01, G06T 15/10, G02B 27/00

(54) **VIRTUAL WEARABLES**
VIRTUELLE WEARABLES
DISPOSITIFS VESTIMENTAIRES VIRTUELS

(30) Priority: 19.12.2014 US 201414577990
(43) Date of publication of application: 25.10.2017
(73) Proprietor: Intel Corporation, Santa Clara, CA 95054 (US)
(72) Inventor: RIDER, Tomer, Nahariya Z, 22407 (IL); MORAN, Amit, Tel Aviv, 69122 (IL); FERENS, Ron, Ramat Hasharon HA, 47227 (IL); KOUPERMAN, Vladimir, Haifa HA, 31015 (IL)
(74) Representative: HGF
(86) International application number: PCT/US2015/061119
(87) International publication number: WO 2016/099752

(56) References cited:
- EP-A2- 2 650 755
- WO-A1-2014/069776
- GB-A- 2 408 128
- US-A1- 2002 015 008
- US-A1- 2005 020 910
- US-A1- 2006 181 482
- US-A1- 2010 199 232
- US-A1- 2012 195 464
- US-A1- 2013 083 173
- US-A1- 2014 055 352
- US-A1- 2014 239 065

## Description

### FIELD

Embodiments described herein generally relate to computers. More particularly, embodiments relate to dynamically facilitating virtual wearables.

### BACKGROUND

With the growth of mobile computing devices, wearable devices are also gaining popularity and noticeable traction in becoming a mainstream technology. However, today's wearable devices are physical devices that are to be attached to or worn on the user' s body. Further, these conventional physical wearable devices vary in their functionalities and uses, such as from needing to use one wearable device for tracking health indicators to another wearable device for playing games. Given the physical nature of these wearable devices and their lack of ability to perform varying tasks, makes these wearable devices inflexible and inefficient. Other conventional techniques require additional external hardware that are expensive, cumbersome, impractical, unstable, and provide for unsatisfying user experience, etc., while yet other conventional techniques require intrusive marks that provide for inflexible configuration and lack of privacy.

US 2014/055352 A1 discloses an apparatus and method for light and optical depth mapping, 3D imaging, modelling, networking, and interfacing on an autonomous, intelligent, wearable wireless wrist computing, display and control system for onboard and remote device and graphic user interface control.

US 2010/199232 A1 discloses a wearable apparatus comprised of a camera, a projector, a mirror, a microphone and a digital computer. The camera captures visual data. This data is analysed by the digital computer to recognize objects and hand gestures, using colour tracking and edge detection techniques. The projector is used, along with a mirror to adjust the direction of the projected light, to project images on objects in the user's environment.

EP 2 650 755 A2 discloses systems, methods and computer program products for transferring content between electronic devices via skin input.

### SUMMARY

The invention is defined in the claims.

According to an aspect of the invention, an apparatus for use in a wearable device to dynamically enable virtual wearables is provided., the wearable device being a primary wearable device of a primary user, the apparatus comprising: detection/reception logic components to detect a wearable area, wherein the wearable area represents a human body part of a primary user, and to detect a secondary wearable device associated with a secondary user; area scanning/tracking logic components to scan the wearable area to enable suitability of the wearable area for projection of a virtual wearable; area-based model creation logic to create a three-dimensional, 3D, model of the wearable area for displaying the virtual wearable on the wearable area, wherein the 3D model is to be communicated to a server computer; communication / compatibility logic components to project the virtual wearable on the wearable area using the primary wearable device, wherein projecting is performed via a projector of the primary wearable device; authentication/permission logic components to authenticate at least one of the secondary user and the secondary wearable device; wherein based on the authentication, the communication/compatibility logic components are further to: query the server computer about permission details indicating whether the secondary user is to be granted access to the virtual wearable; receive the permission details and the 3D model from the server computer, wherein the permission details comprise a notification identifying a grant or denial of permission to access the virtual wearable by the second wearable device; and project the virtual wearable based on the 3D model on the wearable area if the notification identifies a grant of access to the virtual wearable such that the secondary user can access the virtual wearable at the wearable area through the secondary wearable device.

According to an aspect of the invention, a method is provided for dynamically enabling virtual wearables, comprising: detecting a wearable area, using a primary wearable device of a primary user, wherein the wearable area represents a human body part of a primary user; scanning the wearable area, using the primary wearable device, to enable suitability of the wearable area for projection of a virtual wearable; creating, using the primary wearable device, a three-dimensional, 3D, model of the wearable area for displaying the virtual wearable on the wearable area, wherein the 3D model is stored in a server computer; projecting the virtual wearable on the wearable area, using the primary wearable device, wherein projecting is performed via a projector of the primary wearable device; detecting, using the primary wearable device, a secondary wearable device associated with a secondary user; authenticating, using the primary wearable device, at least one of the secondary user and the secondary wearable device; querying, using the primary device, the server computer about permission details indicating whether the secondary user is to be granted access to the virtual wearable associated with the primary user and the primary device; receiving, by the primary device, the permission details and the 3D model from the server computer, wherein the permission details comprise a notification identifying a grant or denial of permission to access the virtual wearable by the second wearable device; and projecting, using the primary device, the virtual wearable based on the 3D model on the wearable area if the notification identifies a grant of access to the virtual wearable such that the secondary user can access the virtual wearable at the wearable area through the secondary wearable device.

According to further aspects of the invention, a machine-readable media, a computing device, a communications device, and a system are also provided.

### BRIEF DESCRIPTION OF THE DRAWINGS

Embodiments are illustrated by way of example, and not by way of limitation, in the figures of the accompanying drawings in which like reference numerals refer to similar elements.
**Figure 1** illustrates a computing device employing a dynamic virtual wearable mechanism according to one embodiment.
**Figure 2** illustrates a dynamic virtual wearable mechanism according to one embodiment. Figure 3A illustrates a method for facilitating virtual wearables according to one embodiment.
**Figure 3B** illustrates a method for facilitating access to virtual wearables via secondary wearable devices according to one embodiment.
**Figure 4** illustrates computer system suitable for implementing embodiments of the present disclosure according to one embodiment.
**Figure 5** illustrates computer environment suitable for implementing embodiments of the present disclosure according to one embodiment.
**Figure 6A** illustrates a computing device having an architectural placement of a selective set of components according to one embodiment.
**Figure 6B** illustrates a virtual wearable according to one embodiment.
**Figure 6C** illustrates tracking points associated with wearable areas according to one embodiment.
**Figures 6D** and **6E** illustrate scanning techniques for determining and securing wearable areas according to one embodiment.
**Figure 6F** illustrates sharing of virtual wearables according to one embodiment.
**Figure 6G** illustrates scanned target wearable area according to one embodiment.

### DETAILED DESCRIPTION

In the following description, numerous specific details are set forth. However, embodiments, as described herein, may be practiced without these specific details. In other instances, well-known circuits, structures and techniques have not been shown in details in order not to obscure the understanding of this description.

Embodiments provide for virtual wearables (also referred to as "virtual wearable computers" or "virtual wearable devices"). In one embodiment, a virtual wearable may be achieved by combining one or more wearable devices (e.g., head-mounted devices, such as wearable glasses (e.g., Google® glass™, etc.) with one or more portable micro-projectors, wherein the virtual wearable may be augmented to be presented on any number and type of sites or areas, such as various human body parts (e.g., front/back of a hand, arm, knee, etc.) wherein the virtual wearable may be accessed and used by the user.

Embodiments further provide for virtual wearables that are (without limitation): 1) secured and private (such as the user may be able to see and decide who else can view their virtual wearable, etc.); 2) configurable (such as the user may be given the ability and option to change, download, and/or share various designs); 3) flexibly designed; 4) configurable to use a single wearable device, such as a head-mounted display, to present other wearables and their features and functionalities; 5) low in consuming power (e.g., single wearable as opposed to several); 6) enhanced to provide better user experience; and 7) accurate.

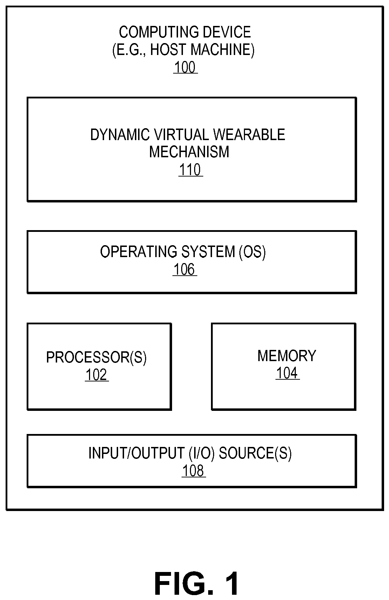

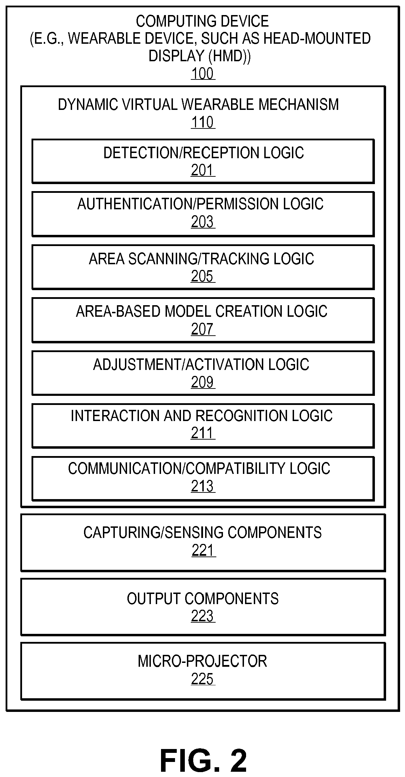

**Figure 1** illustrates a computing device 100 employing a dynamic virtual wearable mechanism 110 according to one embodiment. Computing device 100 serves as a host machine for hosting dynamic virtual wearable mechanism ("virtual mechanism") 110 that includes any number and type of components, as illustrated in **Figure 2****,** to efficiently employ one or more components to dynamically facilitate virtual wearables as will be further described throughout this document.

Computing device 100 may include any number and type of communication devices, such as large computing systems, such as server computers, desktop computers, etc., and may further include set-top boxes (e.g., Internet-based cable television set-top boxes, etc.), global positioning system (GPS)-based devices, etc. Computing device 100 may include mobile computing devices serving as communication devices, such as cellular phones including smartphones, personal digital assistants (PDAs), tablet computers, laptop computers (e.g., Ultrabook™ system, etc.), e-readers, media internet devices (MIDs), media players, smart televisions, television platforms, intelligent devices, computing dust, media players, head-mounted displays (HMDs) (e.g., optical head-mounted display (e.g., wearable glasses, such as Google® glass™), head-mounted binoculars, gaming displays, military headwear, etc.), and other wearable devices (e.g., smartwatches, bracelets, smartcards, jewelry, clothing items, etc.), etc.

Although, as aforementioned, computing device 100 may include any number and type of computing devices and that embodiments are not limited to merely HMDs or other wearable device or any other particular type of computing devices. However, in one embodiment, computing device 100 may include a head-mounting display or another form of wearable device and thus, throughout this document, "HMD", "head-mounting display" and/or "wearable device" may be interchangeably referenced as computing device 100 to be used as an example for brevity, clarity, and ease of understanding.

Computing device 100 may include an operating system (OS) 106 serving as an interface between hardware and/or physical resources of the computer device 100 and a user. Computing device 100 further includes one or more processors 102, memory devices 104, network devices, drivers, or the like, as well as input/output (I/O) sources 108, such as touchscreens, touch panels, touch pads, virtual or regular keyboards, virtual or regular mice, etc.

It is to be noted that terms like "node", "computing node", "server", "server device", "cloud computer", "cloud server", "cloud server computer", "machine", "host machine", "device", "computing device", "computer", "computing system", and the like, may be used interchangeably throughout this document. It is to be further noted that terms like "application", "software application", "program", "software program", "package", "software package", "code", "software code", and the like, may be used interchangeably throughout this document. Also, terms like "job", "input", "request", "message", and the like, may be used interchangeably throughout this document. It is contemplated that the term "user" may refer to an individual or a group of individuals using or having access to computing device 100.

**Figure 2** illustrates a dynamic virtual wearable mechanism 110 according to one embodiment. In one embodiment, virtual mechanism 110 may include any number and type of components, such as (without limitation): detection/reception logic 201; authentication/permission logic 203; area scanning/tracking logic 205; area-based model creation logic 207; adjustment/activation logic 209; interaction and recognition logic 209; sharing logic 211; and communication/compatibility logic 213. Computing device 100 may further include any number and type of other components, such as capturing/sensing components 221, output components 223, and micro-projector 225, etc.

Capturing/sensing components 221 may include any number and type of capturing/sensing devices, such as one or more sending and/or capturing devices (e.g., cameras, microphones, biometric sensors, chemical detectors, signal detectors, wave detectors, force sensors (e.g., accelerometers), illuminators, etc.) that may be used for capturing any amount and type of visual data, such as images (e.g., photos, videos, movies, audio/video streams, etc.), and non-visual data, such as audio streams (e.g., sound, noise, vibration, ultrasound, etc.), radio waves (e.g., wireless signals, such as wireless signals having data, metadata, signs, etc.), chemical changes or properties (e.g., humidity, body temperature, etc.), biometric readings (e.g., figure prints, etc.), environmental/weather conditions, maps, etc. It is contemplated that "sensor" and "detector" may be referenced interchangeably throughout this document. It is further contemplated that one or more capturing/sensing components 221 may further include one or more supporting or supplemental devices for capturing and/or sensing of data, such as illuminators (e.g., infrared (IR) illuminator), light fixtures, generators, sound blockers, etc. It is to be noted that "visual data" may be referred to as "visual" or "visuals"; while, "non-visual data" may be referred to as "non-visual" or "non-visuals" throughout this document.

It is further contemplated that in one embodiment, capturing/sensing components 221 may further include any number and type of sensing devices or sensors (e.g., linear accelerometer) for sensing or detecting any number and type of contexts (e.g., estimating horizon, linear acceleration, etc., relating to a mobile computing device, etc.). For example, capturing/sensing components 221 may include any number and type of sensors, such as (without limitations): accelerometers (e.g., linear accelerometer to measure linear acceleration, etc.); inertial devices (e.g., inertial accelerometers, inertial gyroscopes, micro-electro-mechanical systems (MEMS) gyroscopes, inertial navigators, etc.); gravity gradiometers to study and measure variations in gravitation acceleration due to gravity, etc.

For example, capturing/sensing components 221 may further include (without limitations): audio/visual devices (e.g., cameras, microphones, speakers, etc.); context-aware sensors (e.g., temperature sensors, facial expression and feature measurement sensors working with one or more cameras of audio/visual devices, environment sensors (such as to sense background colors, lights, etc.), biometric sensors (such as to detect fingerprints, etc.), calendar maintenance and reading device), etc.; global positioning system (GPS) sensors; resource requestor; and trusted execution environment (TEE) logic. TEE logic may be employed separately or be part of resource requestor and/or an I/O subsystem, etc.

Computing device 100 may further include one or more output components 223 to remain in communication with one or more capturing/sensing components 221 and one or more components of visual mechanism 110 to facilitate displaying of images, playing or visualization of sounds, displaying visualization of fingerprints, presenting visualization of touch, smell, and/or other sense-related experiences, etc. For example and in one embodiment, output components 223 may include (without limitation) one or more of light sources, display devices or screens, audio speakers, bone conducting speakers, olfactory or smell visual and/or non/visual presentation devices, haptic or touch visual and/or non-visual presentation devices, animation display devices, biometric display devices, X-ray display devices, etc.

Computing device 100 may be in communication with one or more repositories or databases over one or more networks, where any amount and type of data (e.g., real-time data, historical contents, metadata, resources, policies, criteria, rules and regulations, upgrades, etc.) may be stored and maintained. Similarly, computing device 100 may be in communication with any number and type of other computing devices, such as HMDs, wearable devices, mobile computers (e.g., smartphone, a tablet computer, etc.), desktop computers, laptop computers, etc., over one or more networks (e.g., cloud network, the Internet, intranet, Internet of Things ("IoT"), proximity network, Bluetooth, etc.).

In the illustrated embodiment, computing device 100 is shown as hosting virtual mechanism 110; however, it is contemplated that embodiments are not limited as such and that in another embodiment, virtual mechanism 110 may be entirely or partially hosted by multiple or a combination of computing devices; however, throughout this document, for the sake of brevity, clarity, and ease of understanding, virtual mechanism 100 is shown as being hosted by computing device 100.

It is contemplated that computing device 100 may include one or more software applications (e.g., device applications, hardware components applications, business/social application, websites, etc.) in communication with virtual mechanism 110, where a software application may offer one or more user interfaces (e.g., web user interface (WUI), graphical user interface (GUI), touchscreen, etc.) to work with and/or facilitate one or more operations or functionalities of virtual mechanism 110.

In one embodiment, using virtual mechanism 110, a virtual wearable may be facilitated via computing device 100, such as a wearable device, to serve as an augmented display wraparound on an area of any shape or form, such as a user's body part (e.g., hand, knee, arm, etc.). For example and in one embodiment, a virtual wearable may be a well-positioned wraparound over the user's hand or other body parts, such as limbs, providing high-resolution displays (e.g., first and/or second displays) that may be allocated and designed according to one or more models.

In some embodiments, virtual wearable may be fully configurable, via communication/configuration logic 213, to allow for hardware designers and software programmers to use the virtual wearable as a platform to produce virtual wearable devices for augmented reality. Further, it is contemplated that virtual mechanism 110 may serve both the users (such as end-users using/wearing wearable devices, such as computing device 100) and software developers, programmers, hardware designers, etc., such as a developer may use virtual wearables to enable easy-to-sue media creation platforms for differentiating their product or match other products' capabilities. Similarly, for example, a virtual wearable may provide a convenient interface, via output components 223, for the users to allow them to determine whether and which part of their personal data may be shared and which to remain private.

In one embodiment, virtual mechanism 100 facilitates virtual wearables to provide for an enhanced user experience (UX) for users that use various wearable devices (e.g., HMD), such as computing device 100, to enable the users to create and wear such virtual wearables that extend other devices (e.g., wearable devices) or stand on their own. Further, for example and in one embodiment, computing device 100 may include a wearable device (e.g., HMD) and its capturing/sensing components 221 may include, for example, a three-dimension (3D) camera that may then be used with one or more components, such as area-based model creation logic 207, adjustment/activation logic 209, etc., of virtual mechanism 110 that to facilitate a display augmented reality data in a realistic manner where, for example, the user of computing device 100 may see a 3D augmented world.

Similarly, for example and in one embodiment, the 3D camera may be further used for detection and capture of various objects in 3D (e.g., occlusion) as facilitated by detection/reception logic 201 as will be further described below. It is contemplated that occlusion support may be used to provide an enhanced and better illusion experience for the user when experiencing a virtual wearable, such as by using the depth data from the camera, the computing device 100 may capture the depth data of moving objects and occlude the virtual objects, as necessitated or desired. It is contemplated that embodiments are not limited to any particular component (such as 3D cameras) or technique (such as occlusion) and that any number and type of components and/or techniques may be applied or modified to achieve varying results and facilitate enhanced user experience with virtual wearables.

In some embodiments, a virtual wearable, as facilitated by virtual mechanism 110 and computing device 100 (e.g., wearable device, such as HMD), may be displayed at one or more areas (also referred to as "wearable areas" or "wearable body areas") as chosen or preferred by the user of computing device 100. For example and in some embodiments, an display area for a virtual wearable may include various parts of human body, such as the user's body, such that the virtual wearable may be virtually worn by the user and kept mobile and accessible while the user continues with other activities (e.g., running, eating, sitting, dancing, etc.). It is contemplated and to be noted that embodiments are not limited to merely body parts and that any number and type of areas (such as screens, walls, floors, canvass, holes, rocks, beach sand, non-human body parts, plants, trees, etc.) may be used to serve as wearable areas; however, for the sake of brevity, clarity, and ease of understanding, human body areas are used as examples and discussed throughout this document.

To find and use a body part (e.g., front or back of a hand, wrist, knee, knuckles, etc.) that is to serve as a wearable area for the user to wear a virtual wearable, in one embodiment, detection/reception logic 201 may be used to detect the body part and, in another embodiment, one or more wearable accessory or marks may be detected by detection/reception logic 201. For example, a detected accessory may a predefined worn accessory, such as a watch or bracelet, etc., that the user may choose to have extended via the virtual wearable. For example, the user may have smart accessory, such as a smartwatch, on the wrist and choose to have a virtual wearable displayed on a body area (e.g., wrist, arm, hand, etc.) next to the smartwatch such that the smartwatch may be extended into a larger device via the virtual wearable. In another example, an accessory may be a dumb accessory, such as a regular jewelry bracelet, a wrist band, a knee brace, etc.

In one embodiment, as will be further described below, once the initial detection of the body part and/or wearable accessory has been performed by detection/reception logic 201, a virtual wearable model may then be generated to be loaded and snapped onto the area are the user's body part, where the virtual wearable model may be a 3D model that is specifically tailored for the wearable area of the user's body, such as tailored around the curved surface of the body part and/or the wearable accessory which may be next to or aligned with the virtual wearable. Embodiments provide for 3D virtual wearables are properly aligned with the curves of human body areas and/or the edges of wearable accessories so that the virtual wearable abilities extended by these virtual wearables are experienced in a realist manner.

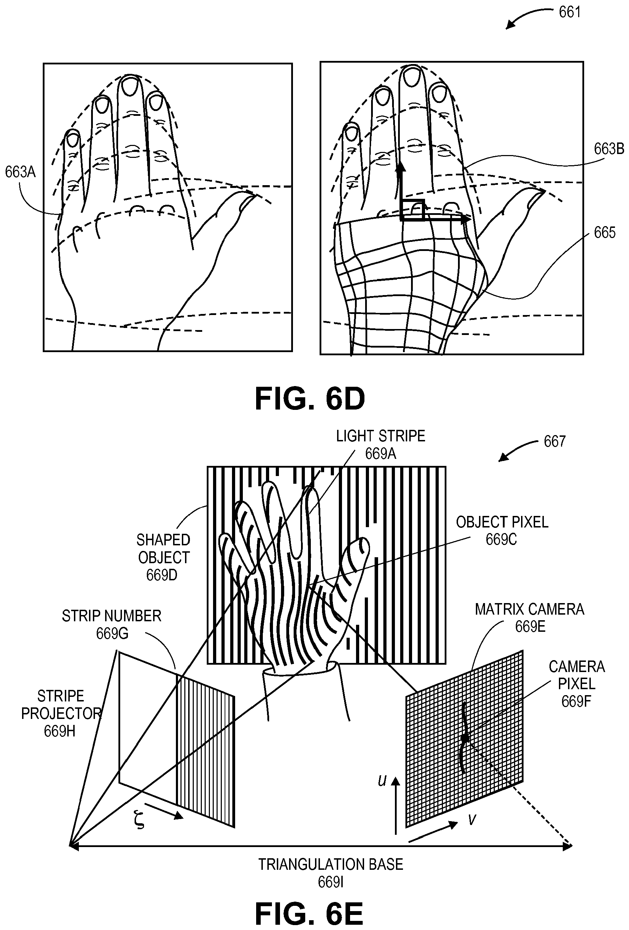

As further illustrated with respect to **Figures 6D-6E****,** in one embodiment, a camera (e.g., 3D camera) of capturing/sensing components 221 may be used to capture an image of the wearable area (whether it be an independent body area or next to a wearable accessory, etc.), where the camera and/or one or more depth sensors of capturing/sensing components 221 may be used to scan and map the wearable area as facilitated by area scanning/tracking logic 205. For example, scanning/tracking logic 205 may facilitate the aforementioned camera and/or one or more depth sensors to scan the entire wearable are and track its nooks and corners, curves and edges, highs and lows, etc.

Once the wearable area has been successfully scanned and mapped via scanning/tracking logic 205, in one embodiment, area-based model creation logic 207 may be used to generate an area model of the wearable area where a highly-fitted virtual wearable may be projected via micro-projector 225 upon activation by adjustment/activation logic 209 and as communicated by communication/compatibility logic 213 of virtual mechanism 110.

In some embodiment, prior to activating the virtual wearable and displaying it on the wearable area, adjustment/activation logic 209 may be use do perform various adjustments, as necessitated or desired, to the virtual wearable such that it is appropriately aligned with and within the wearable area and/or along-side one or more wearable accessories, etc. Any adjustment is performed to the virtual wearable and/or the wearable area to achieve as perfect a fit between the virtual wearable and the wearable are as possible based on the available scanning, tracking, and 3D model information, etc.

As aforementioned, once any necessary or desired adjustment has been made, adjustment/activation logic 209 may activate the 3D model of the virtual wearable to be displayed at and/or within the wearable area, where the virtual wearable is then displayed via communication/compatibility logic 213 to then be used and accessed by the user. In one embodiment, the displaying of the virtual wearable may include projecting the 3D virtual wearable onto the wearable area and/or along-side one or more wearable accessories via micro-projector 225 of computing device 100.

Further, to make the access and use of the virtual wearable both secure and normal as using any another other computing device, interaction and recognition logic 209 may be employed and used to facilitate one or more techniques of touch interaction, gesture recognition, etc. It is contemplated that other such techniques may be employed and that embodiments are not merely limited to touch interaction and gesture recognition.

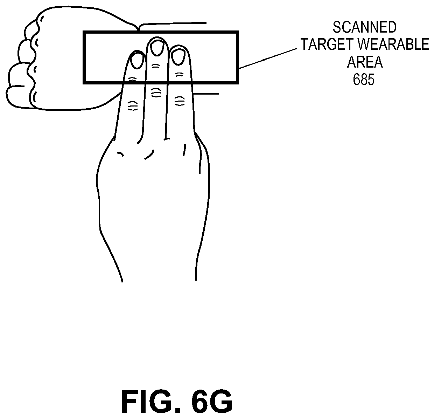

In one embodiment, using interaction and recognition logic 209, upon initial detection of the wearable area as facilitated by detection/reception logic 201, the target wearable area may be scanned and tracked as facilitated by are scanning/tracking logic 205, touch interaction may be employed. For example, it is contemplated that there may be various anomalies or jumps in the wearable area which may be detected using a histogram of the depth data of the wearable area using touch interaction as facilitated by interaction and recognition logic 209. As illustrated with reference to **Figure 6G****,** the y-axis represents the average depth value of the potential wearable area that is scanned from right to left.

In some embodiments, touch interaction may be used for user verification and authentication purposes, such as the user's touch or fingerprints, etc., may be used as a password to allow or deny the user to access the virtual wearable, etc. For example, in one embodiment, after having projected the virtual wearable on the wearable area, touch interaction may be triggered by interaction and recognition logic 209 to detect and accept the user's touch (e.g., fingerprints) to identify and verify the user's credentials so that the user may be authenticated and accordingly, allowed or denied access to the virtual wearable. It is contemplated that touch interaction may be based on any number and type of touch interaction techniques.

In another embodiment, gesture recognition may be employed by interaction recognition logic 209 where the user may perform any number and type of gestures which may be detected by a camera and detected by one or more sensors of capturing/sensing components 221. In one embodiment, gesture recognition may allow the user to perform various gestures to interact with the wearable device, such as computing device 100. For example, the user may make various gestures, such as thumbs up, wave, snapping fingers, etc., which may be predetermined, to communicate with the user's wearable device, such as computing device 100, to perform certain tasks that may or may not be directly related to the virtual wearable being projected on the wearable area. For example, the user may snap fingers to trigger a camera of capturing/sensing components 221 to take a picture, gives thumbs up to triggers computing device 100 to brighten the view of the virtual wearable, or wave to allow a home security application on computing device 100 to lock the doors of the user's house.

Similarly, as mentioned above with reference to touch interaction, gesture recognition may be used for security or authentication purposes; for example, the user may perform a certain gesture, such as show the index finger, which may be used as a password to allow or deny the user to access the virtual wearable, etc. Like touch interaction, it is contemplated that gesture recognition may be based on any number and type of gesture recognition techniques (e.g., Intel® RealSense™ Technology, etc.).

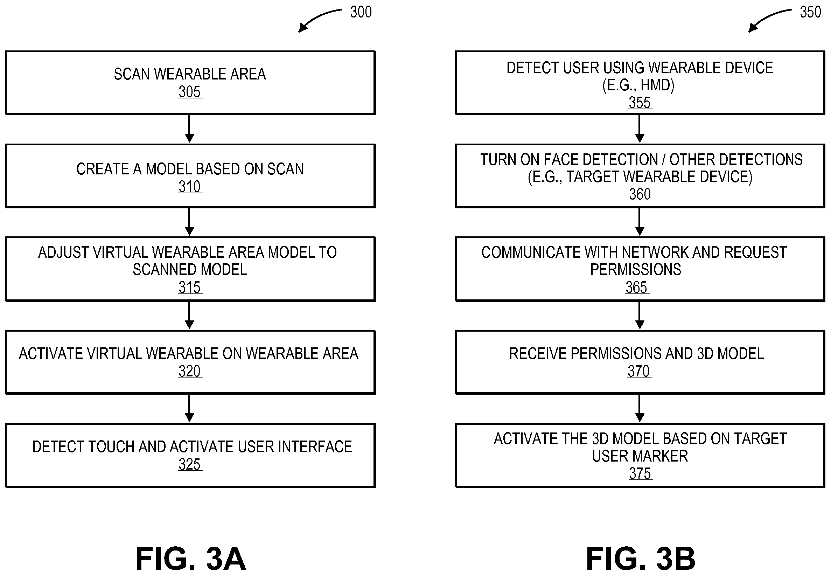

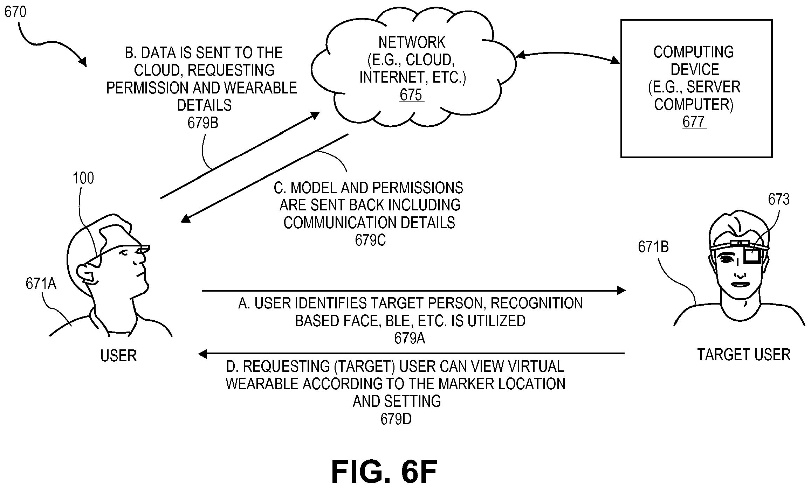

In some embodiments, the user, such as a primary user, of the virtual wearable may choose to share access to the virtual wearable with one or more of other users, such as one or more target users, as further discussed with reference to **Figures 6F** and **3B****.** Embodiments provide for management of secured connections with one or more target users where the primary user may decide which target users may view and/or access the virtual wearable and which ones may not do so. This may be performed on an invitation from the primary user to a target user and/or in request to a request from the target user.

For example, a target user may place a request to view/access the virtual wearable, where this request may be received at detection/reception logic 201. The request along with the target user and/or the target user's wearable device (e.g., HMD) may be authenticated and a permission to view/access the virtual wearable may be granted or denied via authentication/permission logic 203. If the permission is denied, the target user may not view or access the virtual wearable of the primary user. On the other hand, if the permission is grated, the target user may be allowed to view and/or access the primary user's virtual wearable directly through the target user's wearable device. It is contemplated that the target user's wearable device may be a participating wearable device that satisfies the minimum compatibility and communication protocols and standards to be able to participate in the sharing of the virtual wearable.

In some embodiments, for sharing purposes, any number and type of identification and authentication techniques, such as face recognition techniques (e.g., Face.com™, etc.), pairing techniques (e.g., Bluetooth secure seamless paring, etc.) may be employed such that target users and their corresponding target wearable devices may be recognized and authenticated. Similarly, upon deciding on whether the target user be granted or denied permission to access the virtual wearable, one or more other techniques (e.g., user account control (UAC) technique, etc.) may be employed to show or block the view of the virtual wearable to the target wearable device associated with the target user.

Communication/compatibility logic 213 may be used to facilitate dynamic communication and compatibility between computing device 100 and any number and type of other computing devices (such as wearable computing devices, mobile computing devices, desktop computers, server computing devices, etc.), processing devices (e.g., central processing unit (CPU), graphics processing unit (GPU), etc.), capturing/sensing components 221 (e.g., non-visual data sensors/detectors, such as audio sensors, olfactory sensors, haptic sensors, signal sensors, vibration sensors, chemicals detectors, radio wave detectors, force sensors, weather/temperature sensors, body/biometric sensors, scanners, etc., and visual data sensors/detectors, such as cameras, etc.), user/context-awareness components and/or identification/verification sensors/devices (such as biometric sensors/detectors, scanners, etc.), memory or storage devices, databases and/or data sources (such as data storage devices, hard drives, solid-state drives, hard disks, memory cards or devices, memory circuits, etc.), networks (e.g., cloud network, the Internet, intranet, cellular network, proximity networks, such as Bluetooth, Bluetooth low energy (BLE), Bluetooth Smart, Wi-Fi proximity, Radio Frequency Identification (RFID), Near Field Communication (NFC), Body Area Network (BAN), etc.), wireless or wired communications and relevant protocols (e.g., Wi-Fi®, WiMAX, Ethernet, etc.), connectivity and location management techniques, software applications/websites, (e.g., social and/or business networking websites, business applications, games and other entertainment applications, etc.), programming languages, etc., while ensuring compatibility with changing technologies, parameters, protocols, standards, etc.

Throughout this document, terms like "logic", "component", "module", "framework", "engine", "tool", and the like, may be referenced interchangeably and include, by way of example, software, hardware, and/or any combination of software and hardware, such as firmware. Further, any use of a particular brand, word, term, phrase, name, and/or acronym, such as "physical wearable", "virtual wearable", "wearable device", "Head-Mounted Display" or "HDM", "3D model", "3D camera", "augmented reality" or "AR", etc., should not be read to limit embodiments to software or devices that carry that label in products or in literature external to this document.

It is contemplated that any number and type of components may be added to and/or removed from virtual mechanism 110 to facilitate various embodiments including adding, removing, and/or enhancing certain features. For brevity, clarity, and ease of understanding of virtual mechanism 110, many of the standard and/or known components, such as those of a computing device, are not shown or discussed here. It is contemplated that embodiments, as described herein, are not limited to any particular technology, topology, system, architecture, and/or standard and are dynamic enough to adopt and adapt to any future changes.

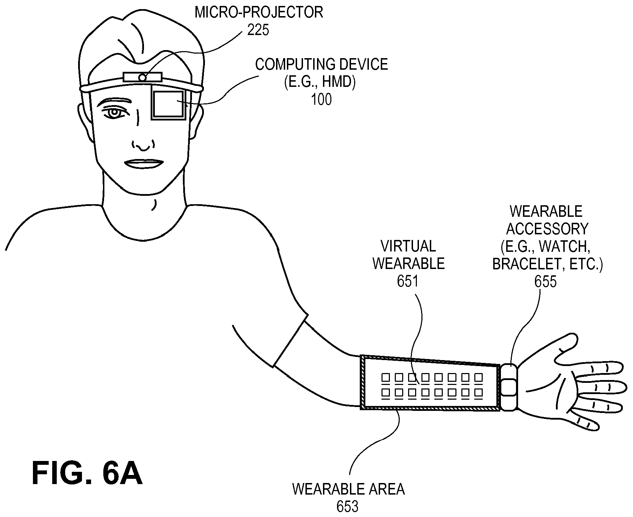

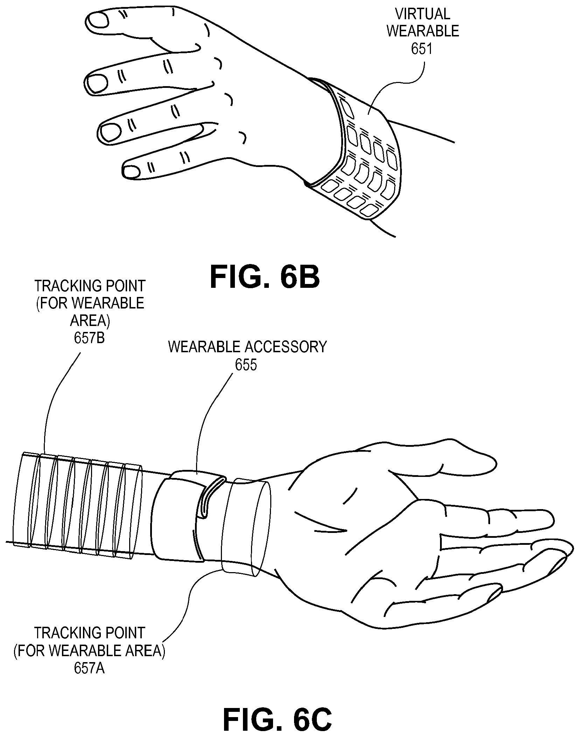

Referring now to **Figure 6A** illustrates a virtual wearable 651 according to one embodiment. For brevity, many of the details discussed with reference to **Figures 1** and **2** may not be discussed or repeated hereafter. In the illustrated, embodiment, virtual wearable 651 is shown to be displayed on a user's arm such that virtual wearable 651 is projected by micro-projector 225 at and within wearable area 653 on the user's arm. For illustration purposes, the user is shown to be wearing wearable accessory 655 (e.g., watch, bracelet, etc.) which may be smart or dumb. If, for example, wearable accessory 655 includes a dumb wearable accessory, it may be used as a tracking point for tracking and scanning of wearable area 653 as is further shown with reference to **Figure 6C****.** If, for example, wearable accessory 655 includes a smart wearable accessory (e.g., smart watch, smart bracelet, etc.), the smart wearable accessory may be made part of virtual wearable 651, such as virtual wearable 651 may be made and projected as an extension to the smart wearable accessory.

As further discussed with reference to **Figure 2****,** computing device 100 may include a wearable device, such as a head-mounted display, which hosts virtual mechanism 110 along with any number and type of other components, such as micro-projector 225. As further discussed with reference to **Figure 2****,** it is contemplated and to be noted that although in this and subsequent illustrations, virtual wearable 651 is shown to be projected on a human arm, embodiments are not so limited.

**Figure 6B** illustrates a virtual wearable 651 according to one embodiment. In the illustrated embodiment, virtual wearable 651 is shown from a different angle where, in some embodiments, virtual wearable 651 may appear as a wraparound if the user's arm is moved in a particular direction. In other embodiments, virtual wearable 651 may not be a wraparound.

**Figure 6C** illustrates tracking points 657A-B associated with wearable areas according to one embodiment. As previously discussed with reference to **Figure 2****,** in one embodiment, various tracking points, such as tracking points 657A-657B, may be tracked, monitored, and noted as referenced points to then be used to determine the corresponding potential wearable areas. These tracking points 657A-B may have been caused any number and type of reasons, such as wearing of accessories, etc. In another embodiment, an object (e.g., wearable accessory 655) may be used to determine a tracking point, such as edges and boundaries of wearable accessory 655 (e.g., watch, bracelet, wristband, etc.) may be used to serve as reference points to determine the potential wearable area.

**Figures 6D** and **6E** illustrate scanning techniques 661, 667 for determining and securing wearable areas according to one embodiment. It is contemplated that several approaches to 3D scanning, based on different principle of imaging, may be employed for short-range scanning, while other techniques may be better suited for mid-range or long-range scanning. For example, for close range 3D scanning, structured light technique 667 may be employed and achieved using structured light scanners and various other components. For example, structured light scanners, such as stripe projector 669H and matrix camera 669E, may use trigonometric triangulation base 669I where a series of linear patterns may be projected onto an object, such as a human hand, as held by shaped object 669D. For example, light stripe 669A may be projected, determining strip number 669G. Similarly, camera pixel 669F, object pixel 669C, etc., may be determined via matrix camera 669E. In some embodiments, by examining the edges of each line in the pattern, a distance from the scanner to the object's surface may be calculated and the process ends, a 3D model of the scanned surface of the object may be generated as shown with referenced to technique 667.

With reference to and as illustrated in technique 661 for surface detection and placement, it is contemplated that structured light systems may project grids or other patters, such as patters 665 shown on object 663B as opposed to on object 663A, which reveal the contours of complex objects 663A, 663B when viewed from a particular angle, such as a side. The lines may look straight when projected onto a flat surface, such as a wall, but are distorted when projected onto uneven surfaces, such as people, furniture, etc. Accordingly, a model may be created of the surface of a user's limb, such as hand 663A, 663B. It is contemplated that structured light is merely one approach for scanning 3D object and that other approaches may be employed.

To achieve the desired experience of custom fitted virtual wearable over a 3D surface of a body part, the projection area, such as wearable area, may be set properly using any number of processes. For example, a supervised process may be used in which the user may go through a calibration process upon this first use of a virtual wearable, where the user sets the projection area while a custom classifier is trained to detect and train this projection area which may then be used as a wearable area. Similarly, another process may be used which may rely on a globally trained classifier for predefined body parts, such as a hand-shaped detector for human hands, etc., which may help remove any need for calibration, but may be a less accurate.

**Figure 6F** illustrates sharing of virtual wearables according to one embodiment. In some embodiments, a primary user, such as user 671A, may choose to share a virtual wearable with one or more target users, such as primary user 671B. As illustrated, target user 671B may be recognized 679A based on any number of techniques, such as face recognition technique. Upon recognition, relevant data may be sent 679B from wearable device 100 of primary user 671A to computing device (e.g., server computer) 677 over one or more networks 675 (e.g., cloud network, Internet, etc.) to request permission and other wearable details. For example, computing device 677 may have access to one or more databases storing any amount and type of data relating to various users, wearable devices, authentication and permission standards and protocols, predetermined criteria, etc.

Upon receiving the request, computing device 677 may access the relevant data at the one or more databases and upon performing necessary analysis, any permission details, including communication details, are communicated back 679C to wearable device 100 of primary user 671A. It is contemplated that any permission details may include a notification regarding a grant or denial of permission to establish communication between wearable devices 100, 673 for wearable device 673 to view and/or access the virtual wearable being projected by wearable device 100. Upon receiving the permission details, wearable device 673 and target user 671B are informed and requested 679D to view and/or access the virtual wearable being projected by wearable device 100 in accordance with the relevant marker locations and settings.

**Figure 6G** illustrates scanned target wearable area 685 according to one embodiment. As discussed with reference to interaction and recognition logic 211, touch interaction and gesture recognition techniques may be employed as facilitated by virtual mechanism 110 of **Figure 2****.** In the illustrated embodiment, various anomalies, jumps, etc., of the target wearable area may be detected, such as by using a histogram of the depth data. As illustrated, the user may touch to scan the target wearable area to provide scanned target wearable area 685 where Y-axis represents an average depth value of scanned target wearable area 685, such as from right to left.

Now referring to **Figure 3A** illustrates a method 300 for facilitating virtual wearables according to one embodiment. Method 300 may be performed by processing logic that may comprise hardware (e.g., circuitry, dedicated logic, programmable logic, etc.), software (such as instructions run on a processing device), or a combination thereof. In one embodiment, method 300 may be performed by virtual mechanism 110 of **Figures 1-2****.** The processes of method 300 are illustrated in linear sequences for brevity and clarity in presentation; however, it is contemplated that any number of them can be performed in parallel, asynchronously, or in different orders. For brevity, many of the details discussed with reference to **Figures 1** and **2****-H** may not be discussed or repeated hereafter.

Method 300 may begin with block 305 with the scanning of a potential wearable area. At block 310, a model, such as a 3D model, of the wearable area is generated based on the scanning of the wearable area, where, at block 315, this wearable area model is adjusted or altered, as necessitated or desired, so that a proper fit may be provide for a potential virtual wearable. At block 320, in one embodiment, the virtual wearable is activated and projected on the wearable area by a wearable device (e.g., HMD) being worn by a user. At block 325, in one embodiment, a user touch is detected and authenticated and, in response, a user interface of the virtual wearable may be activated for the user to view and access the virtual wearable and perform any number of tasks as would be doable with any other computing device.

**Figure 3B** illustrates a method 350 for facilitating access to virtual wearables via secondary wearable devices according to one embodiment. Method 350 may be performed by processing logic that may comprise hardware (e.g., circuitry, dedicated logic, programmable logic, etc.), software (such as instructions run on a processing device), or a combination thereof. In one embodiment, method 350 may be performed by virtual mechanism 110 of **Figures 1-2****.** The processes of method 350 are illustrated in linear sequences for brevity and clarity in presentation; however, it is contemplated that any number of them can be performed in parallel, asynchronously, or in different orders. For brevity, many of the details discussed with reference to **Figures 1** and **2****-H** may not be discussed or repeated hereafter.

Method 350 begins at block 355 with detection of a target user wearing a target wearable device (e.g., HMD), where the detection may be performed between the target wearable device and a primary wearable device being worn by a primary user. At block 360, various user and/or device recognition, identifying, and authentication techniques may be turned on, such as face detection and recognition technique, device authentication techniques, etc. At block 365, the primary device may communicate with a server computer over a network (e.g., cloud network) to obtain any necessary information about the target user and/or wearable device and whether they are to be granted access to the virtual wearable associated with the primary user and/or device. At block 365, any permission details along with a potential 3D model may be provided by the server computer to the primary device and based on the permission details, such as with the grant of the permission, at block 370, the 3D model may be activated based on various markers and settings such that the target user, using the target wearable device, may view and access and perform various tasks using the virtual wearable as projected by the primary wearable device.

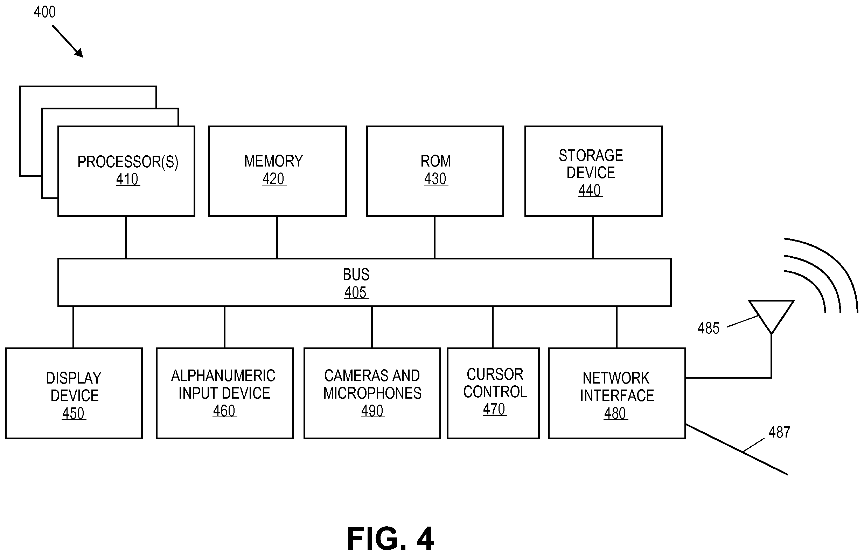

**Figure 4** illustrates an embodiment of a computing system 400 capable of supporting the operations discussed above. Computing system 400 represents a range of computing and electronic devices (wired or wireless) including, for example, desktop computing systems, laptop computing systems, cellular telephones, personal digital assistants (PDAs) including cellular-enabled PDAs, set top boxes, smartphones, tablets, wearable devices, etc. Alternate computing systems may include more, fewer and/or different components. Computing device 400 may be the same as or similar to or include computing devices 100 described in reference to **Figure 1****.**

Computing system 400 includes bus 405 (or, for example, a link, an interconnect, or another type of communication device or interface to communicate information) and processor 410 coupled to bus 405 that may process information. While computing system 400 is illustrated with a single processor, it may include multiple processors and/or co-processors, such as one or more of central processors, image signal processors, graphics processors, and vision processors, etc. Computing system 400 may further include random access memory (RAM) or other dynamic storage device 420 (referred to as main memory), coupled to bus 405 and may store information and instructions that may be executed by processor 410. Main memory 420 may also be used to store temporary variables or other intermediate information during execution of instructions by processor 410.

Computing system 400 may also include read only memory (ROM) and/or other storage device 430 coupled to bus 405 that may store static information and instructions for processor 410. Date storage device 440 may be coupled to bus 405 to store information and instructions. Date storage device 440, such as magnetic disk or optical disc and corresponding drive may be coupled to computing system 400.

Computing system 400 may also be coupled via bus 405 to display device 450, such as a cathode ray tube (CRT), liquid crystal display (LCD) or Organic Light Emitting Diode (OLED) array, to display information to a user. User input device 460, including alphanumeric and other keys, may be coupled to bus 405 to communicate information and command selections to processor 410. Another type of user input device 460 is cursor control 470, such as a mouse, a trackball, a touchscreen, a touchpad, or cursor direction keys to communicate direction information and command selections to processor 410 and to control cursor movement on display 450. Camera and microphone arrays 490 of computer system 400 may be coupled to bus 405 to observe gestures, record audio and video and to receive and transmit visual and audio commands.

Computing system 400 may further include network interface(s) 480 to provide access to a network, such as a local area network (LAN), a wide area network (WAN), a metropolitan area network (MAN), a personal area network (PAN), Bluetooth, a cloud network, a mobile network (e.g., 3^{rd} Generation (3G), etc.), an intranet, the Internet, etc. Network interface(s) 480 may include, for example, a wireless network interface having antenna 485, which may represent one or more antenna(e). Network interface(s) 480 may also include, for example, a wired network interface to communicate with remote devices via network cable 487, which may be, for example, an Ethernet cable, a coaxial cable, a fiber optic cable, a serial cable, or a parallel cable.

Network interface(s) 480 may provide access to a LAN, for example, by conforming to IEEE 802.11b and/or IEEE 802.1 1g standards, and/or the wireless network interface may provide access to a personal area network, for example, by conforming to Bluetooth standards. Other wireless network interfaces and/or protocols, including previous and subsequent versions of the standards, may also be supported.

In addition to, or instead of, communication via the wireless LAN standards, network interface(s) 480 may provide wireless communication using, for example, Time Division, Multiple Access (TDMA) protocols, Global Systems for Mobile Communications (GSM) protocols, Code Division, Multiple Access (CDMA) protocols, and/or any other type of wireless communications protocols.

Network interface(s) 480 may include one or more communication interfaces, such as a modem, a network interface card, or other well-known interface devices, such as those used for coupling to the Ethernet, token ring, or other types of physical wired or wireless attachments for purposes of providing a communication link to support a LAN or a WAN, for example. In this manner, the computer system may also be coupled to a number of peripheral devices, clients, control surfaces, consoles, or servers via a conventional network infrastructure, including an Intranet or the Internet, for example.

It is to be appreciated that a lesser or more equipped system than the example described above may be preferred for certain implementations. Therefore, the configuration of computing system 400 may vary from implementation to implementation depending upon numerous factors, such as price constraints, performance requirements, technological improvements, or other circumstances. Examples of the electronic device or computer system 400 may include without limitation a mobile device, a personal digital assistant, a mobile computing device, a smartphone, a cellular telephone, a handset, a one-way pager, a two-way pager, a messaging device, a computer, a personal computer (PC), a desktop computer, a laptop computer, a notebook computer, a handheld computer, a tablet computer, a server, a server array or server farm, a web server, a network server, an Internet server, a work station, a mini-computer, a main frame computer, a supercomputer, a network appliance, a web appliance, a distributed computing system, multiprocessor systems, processor-based systems, consumer electronics, programmable consumer electronics, television, digital television, set top box, wireless access point, base station, subscriber station, mobile subscriber center, radio network controller, router, hub, gateway, bridge, switch, machine, or combinations thereof.

Embodiments may be implemented as any or a combination of: one or more microchips or integrated circuits interconnected using a parentboard, hardwired logic, software stored by a memory device and executed by a microprocessor, firmware, an application specific integrated circuit (ASIC), and/or a field programmable gate array (FPGA). The term "logic" may include, by way of example, software or hardware and/or combinations of software and hardware.

Embodiments may be provided, for example, as a computer program product which may include one or more machine-readable media having stored thereon machine-executable instructions that, when executed by one or more machines such as a computer, network of computers, or other electronic devices, may result in the one or more machines carrying out operations in accordance with embodiments described herein. A machine-readable medium may include, but is not limited to, floppy diskettes, optical disks, CD-ROMs (Compact Disc-Read Only Memories), and magneto-optical disks, ROMs, RAMs, EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

Moreover, embodiments may be downloaded as a computer program product, wherein the program may be transferred from a remote computer (e.g., a server) to a requesting computer (e.g., a client) by way of one or more data signals embodied in and/or modulated by a carrier wave or other propagation medium via a communication link (e.g., a modem and/or network connection).

References to "one embodiment", "an embodiment", "example embodiment", "various embodiments", etc., indicate that the embodiment(s) so described may include particular features, structures, or characteristics, but not every embodiment necessarily includes the particular features, structures, or characteristics. Further, some embodiments may have some, all, or none of the features described for other embodiments.

In the following description and claims, the term "coupled" along with its derivatives, may be used. "Coupled" is used to indicate that two or more elements co-operate or interact with each other, but they may or may not have intervening physical or electrical components between them.

As used in the claims, unless otherwise specified the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.

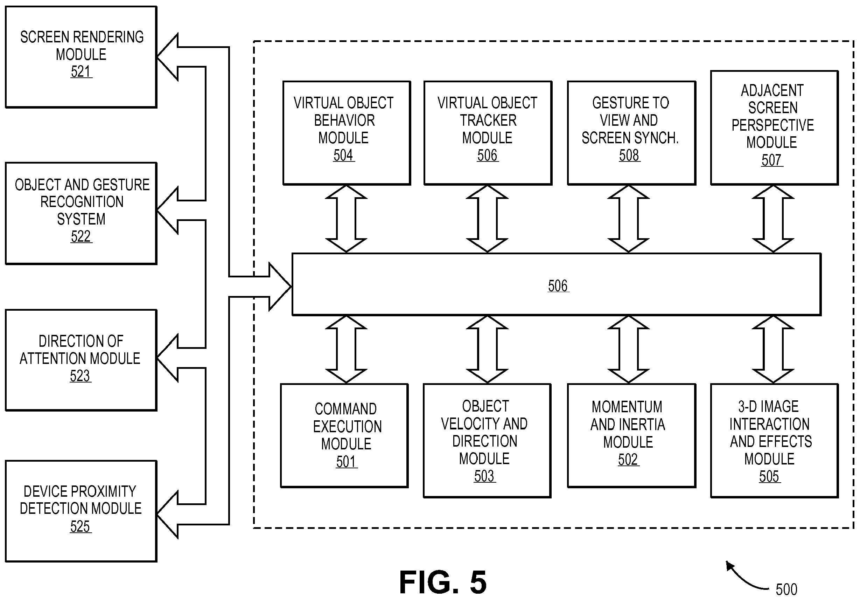

**Figure 5** illustrates an embodiment of a computing environment 500 capable of supporting the operations discussed above. The modules and systems can be implemented in a variety of different hardware architectures and form factors including that shown in Figure 9.

The Command Execution Module 501 includes a central processing unit to cache and execute commands and to distribute tasks among the other modules and systems shown. It may include an instruction stack, a cache memory to store intermediate and final results, and mass memory to store applications and operating systems. The Command Execution Module may also serve as a central coordination and task allocation unit for the system.

The Screen Rendering Module 521 draws objects on the one or more multiple screens for the user to see. It can be adapted to receive the data from the Virtual Object Behavior Module 504, described below, and to render the virtual object and any other objects and forces on the appropriate screen or screens. Thus, the data from the Virtual Object Behavior Module would determine the position and dynamics of the virtual object and associated gestures, forces and objects, for example, and the Screen Rendering Module would depict the virtual object and associated objects and environment on a screen, accordingly. The Screen Rendering Module could further be adapted to receive data from the Adjacent Screen Perspective Module 507, described below, to either depict a target landing area for the virtual object if the virtual object could be moved to the display of the device with which the Adjacent Screen Perspective Module is associated. Thus, for example, if the virtual object is being moved from a main screen to an auxiliary screen, the Adjacent Screen Perspective Module 2 could send data to the Screen Rendering Module to suggest, for example in shadow form, one or more target landing areas for the virtual object on that track to a user's hand movements or eye movements.

The Object and Gesture Recognition System 522 may be adapted to recognize and track hand and harm gestures of a user. Such a module may be used to recognize hands, fingers, finger gestures, hand movements and a location of hands relative to displays. For example, the Object and Gesture Recognition Module could for example determine that a user made a body part gesture to drop or throw a virtual object onto one or the other of the multiple screens, or that the user made a body part gesture to move the virtual object to a bezel of one or the other of the multiple screens. The Object and Gesture Recognition System may be coupled to a camera or camera array, a microphone or microphone array, a touch screen or touch surface, or a pointing device, or some combination of these items, to detect gestures and commands from the user.

The touch screen or touch surface of the Object and Gesture Recognition System may include a touch screen sensor. Data from the sensor may be fed to hardware, software, firmware or a combination of the same to map the touch gesture of a user's hand on the screen or surface to a corresponding dynamic behavior of a virtual object. The sensor date may be used to momentum and inertia factors to allow a variety of momentum behavior for a virtual object based on input from the user's hand, such as a swipe rate of a user's finger relative to the screen. Pinching gestures may be interpreted as a command to lift a virtual object from the display screen, or to begin generating a virtual binding associated with the virtual object or to zoom in or out on a display. Similar commands may be generated by the Object and Gesture Recognition System using one or more cameras without benefit of a touch surface.

The Direction of Attention Module 523 may be equipped with cameras or other sensors to track the position or orientation of a user's face or hands. When a gesture or voice command is issued, the system can determine the appropriate screen for the gesture. In one example, a camera is mounted near each display to detect whether the user is facing that display. If so, then the direction of attention module information is provided to the Object and Gesture Recognition Module 522 to ensure that the gestures or commands are associated with the appropriate library for the active display. Similarly, if the user is looking away from all of the screens, then commands can be ignored.

The Device Proximity Detection Module 525 can use proximity sensors, compasses, GPS (global positioning system) receivers, personal area network radios, and other types of sensors, together with triangulation and other techniques to determine the proximity of other devices. Once a nearby device is detected, it can be registered to the system and its type can be determined as an input device or a display device or both. For an input device, received data may then be applied to the Object Gesture and Recognition System 522. For a display device, it may be considered by the Adjacent Screen Perspective Module 507.

The Virtual Object Behavior Module 504 is adapted to receive input from the Object Velocity and Direction Module, and to apply such input to a virtual object being shown in the display. Thus, for example, the Object and Gesture Recognition System would interpret a user gesture and by mapping the captured movements of a user's hand to recognized movements, the Virtual Object Tracker Module would associate the virtual object's position and movements to the movements as recognized by Object and Gesture Recognition System, the Object and Velocity and Direction Module would capture the dynamics of the virtual object's movements, and the Virtual Object Behavior Module would receive the input from the Object and Velocity and Direction Module to generate data that would direct the movements of the virtual object to correspond to the input from the Object and Velocity and Direction Module.

The Virtual Object Tracker Module 506 on the other hand may be adapted to track where a virtual object should be located in three dimensional space in a vicinity of an display, and which body part of the user is holding the virtual object, based on input from the Object and Gesture Recognition Module. The Virtual Object Tracker Module 506 may for example track a virtual object as it moves across and between screens and track which body part of the user is holding that virtual object. Tracking the body part that is holding the virtual object allows a continuous awareness of the body part's air movements, and thus an eventual awareness as to whether the virtual object has been released onto one or more screens.

The Gesture to View and Screen Synchronization Module 508, receives the selection of the view and screen or both from the Direction of Attention Module 523 and, in some cases, voice commands to determine which view is the active view and which screen is the active screen. It then causes the relevant gesture library to be loaded for the Object and Gesture Recognition System 522. Various views of an application on one or more screens can be associated with alternative gesture libraries or a set of gesture templates for a given view. As an example in Figure 1A a pinch-release gesture launches a torpedo, but in Figure 1B, the same gesture launches a depth charge.

The Adjacent Screen Perspective Module 507, which may include or be coupled to the Device Proximity Detection Module 525, may be adapted to determine an angle and position of one display relative to another display. A projected display includes, for example, an image projected onto a wall or screen. The ability to detect a proximity of a nearby screen and a corresponding angle or orientation of a display projected therefrom may for example be accomplished with either an infrared emitter and receiver, or electromagnetic or photo-detection sensing capability. For technologies that allow projected displays with touch input, the incoming video can be analyzed to determine the position of a projected display and to correct for the distortion caused by displaying at an angle. An accelerometer, magnetometer, compass, or camera can be used to determine the angle at which a device is being held while infrared emitters and cameras could allow the orientation of the screen device to be determined in relation to the sensors on an adjacent device. The Adjacent Screen Perspective Module 507 may, in this way, determine coordinates of an adjacent screen relative to its own screen coordinates. Thus, the Adjacent Screen Perspective Module may determine which devices are in proximity to each other, and further potential targets for moving one or more virtual object's across screens. The Adjacent Screen Perspective Module may further allow the position of the screens to be correlated to a model of three-dimensional space representing all of the existing objects and virtual objects.

The Object and Velocity and Direction Module 503 may be adapted to estimate the dynamics of a virtual object being moved, such as its trajectory, velocity (whether linear or angular), momentum (whether linear or angular), etc. by receiving input from the Virtual Object Tracker Module. The Object and Velocity and Direction Module may further be adapted to estimate dynamics of any physics forces, by for example estimating the acceleration, deflection, degree of stretching of a virtual binding, etc. and the dynamic behavior of a virtual object once released by a user's body part. The Object and Velocity and Direction Module may also use image motion, size and angle changes to estimate the velocity of objects, such as the velocity of hands and fingers

The Momentum and Inertia Module 502 can use image motion, image size, and angle changes of objects in the image plane or in a three-dimensional space to estimate the velocity and direction of objects in the space or on a display. The Momentum and Inertia Module is coupled to the Object and Gesture Recognition System 522 to estimate the velocity of gestures performed by hands, fingers, and other body parts and then to apply those estimates to determine momentum and velocities to virtual objects that are to be affected by the gesture.

The 3D Image Interaction and Effects Module 505 tracks user interaction with 3D images that appear to extend out of one or more screens. The influence of objects in the z-axis (towards and away from the plane of the screen) can be calculated together with the relative influence of these objects upon each other. For example, an object thrown by a user gesture can be influenced by 3D objects in the foreground before the virtual object arrives at the plane of the screen. These objects may change the direction or velocity of the projectile or destroy it entirely. The object can be rendered by the 3D Image Interaction and Effects Module in the foreground on one or more of the displays.

The following clauses and/or examples pertain to further embodiments or examples. Specifics in the examples may be used anywhere in one or more embodiments. The various features of the different embodiments or examples may be variously combined with some features included and others excluded to suit a variety of different applications. Examples may include subject matter such as a method, means for performing acts of the method, at least one machine-readable medium including instructions that, when performed by a machine cause the machine to performs acts of the method, or of an apparatus or system for facilitating hybrid communication according to embodiments and examples described herein.

Some embodiments pertain to Example 1 that includes an apparatus to dynamically facilitate virtual wearables, comprising: detection/reception logic to detect a wearable area, wherein the wearable area represents a human body part of a primary user; area scanning/tracking logic to scan the wearable area to facilitate suitability of the wearable area for projection of a virtual wearable; and communication/compatibility logic to project the virtual wearable on the wearable area using a primary wearable device of the primary user, wherein projecting is performed via a projector of the primary wearable device.

Example 2 includes the subject matter of Example 1, wherein detection of the wearable area is performed via a camera of capturing/sensing components of the primary wearable device, and wherein the projection of the virtual wearable is performed via a projector of the primary wearable device, wherein the primary wearable device includes a head-mounted display (HMD) being worn by the primary user.

Example 3 includes the subject matter of Example 1, further comprising area-based model creation logic to create a three-dimension (3D) model of the wearable area to instruct the communication/compatibility logic to facilitate a 3D-based projection of the virtual wearable on the wearable area.

Example 4 includes the subject matter of Example 1, further comprising adjustment/activation logic to perform adjustment of the wearable area to remedy unevenness of a surface of the wearable area, wherein the unevenness is caused by one or more factors including contours, curves, shapes, forms, edges, jumps, and bumps on the surface, wherein the adjustment/activation logic is further to activate the 3D model of the wearable area and the projector of the primary wearable device to project the virtual wearable to fit the confines of the wearable area.

Example 5 includes the subject matter of Example 1, further comprising interaction and recognition logic to: identify an interaction of the primary user with the virtual wearable; and recognize the interaction of the primary user, wherein recognizing further includes recognizing one or more features of the primary user or the primary wearable device, wherein the primary user is facilitated access to the virtual wearable in response to the identification and recognition of the interaction.

Example 6 includes the subject matter of Example 1, wherein the detection/reception logic to detect a secondary wearable device associated with a second user to allow the secondary wearable device to access the primary virtual wearable at the wearable area.

Example 7 includes the subject matter of Example 1 or 6, further comprising authentication/permission logic to: authenticate at least one of the secondary user and the secondary wearable device; and form, based on the authentication, permission details relating to the secondary user or the secondary wearable device, wherein the permission details include a notification identifying a grant or denial of permission to access the virtual wearable.

Example 8 includes the subject matter of Example 1 or 7, wherein the communication/compatibility logic is further to: facilitate communication between the first and second wearable devices if the permission to access is granted, wherein the second wearable device is allowed to access the virtual wearable within the wearable area; and decline the communication between the first and second wearable devices if the permission to access is denied.

Some embodiments pertain to Example 9 that includes a method for dynamically facilitating virtual wearables, comprising: detecting a wearable area, wherein the wearable area represents a human body part of a primary user; scanning the wearable area to facilitate suitability of the wearable area for projection of a virtual wearable; and projecting the virtual wearable on the wearable area using a primary wearable device of the primary user, wherein projecting is performed via a projector of the primary wearable device.

Example 10 includes the subject matter of Example 9, wherein detection of the wearable area is performed via a camera of capturing/sensing components of the primary wearable device, and wherein the projection of the virtual wearable is performed via a projector of the primary wearable device, wherein the primary wearable device includes a head-mounted display (HMD) being worn by the primary user.

Example 11 includes the subject matter of Example 9, further comprising creating a three-dimension (3D) model of the wearable area to facilitate a 3D-based projection of the virtual wearable on the wearable area.

Example 12 includes the subject matter of Example 9, further comprising: performing adjustment of the wearable area to remedy unevenness of a surface of the wearable area, wherein the unevenness is caused by one or more factors including contours, curves, shapes, forms, edges, jumps, and bumps on the surface; and activating the 3D model of the wearable area and the projector of the primary wearable device to project the virtual wearable to fit the confines of the wearable area.

Example 13 includes the subject matter of Example 9, further comprising: identifying an interaction of the primary user with the virtual wearable; and recognizing the interaction of the primary user, wherein recognizing further includes recognizing one or more features of the primary user or the primary wearable device, wherein the primary user is facilitated access to the virtual wearable in response to the identification and recognition of the interaction.

Example 14 includes the subject matter of Example 9, further comprising detecting a secondary wearable device associated with a second user to allow the secondary wearable device to access the primary virtual wearable at the wearable area.

Example 15 includes the subject matter of Example 9 or 14, further comprising: authenticating at least one of the secondary user and the secondary wearable device; and forming, based on the authentication, permission details relating to the secondary user or the secondary wearable device, wherein the permission details include a notification identifying a grant or denial of permission to access the virtual wearable.

Example 16 includes the subject matter of Example 9 or 15, further comprising: facilitating communication between the first and second wearable devices if the permission to access is granted, wherein the second wearable device is allowed to access the virtual wearable within the wearable area; and declining the communication between the first and second wearable devices if the permission to access is denied.

Example 17 includes at least one machine-readable medium comprising a plurality of instructions, when executed on a computing device, to implement or perform a method or realize an apparatus as claimed in any preceding claims.

Example 18 includes at least one non-transitory or tangible machine-readable medium comprising a plurality of instructions, when executed on a computing device, to implement or perform a method or realize an apparatus as claimed in any preceding claims.

Example 19 includes a system comprising a mechanism to implement or perform a method or realize an apparatus as claimed in any preceding claims.

Example 20 includes an apparatus comprising means to perform a method as claimed in any preceding claims.

Example 21 includes a computing device arranged to implement or perform a method or realize an apparatus as claimed in any preceding claims.

Example 22 includes a communications device arranged to implement or perform a method or realize an apparatus as claimed in any preceding claims.

Some embodiments pertain to Example 23 includes a system comprising a storage device having instructions, and a processor to execute the instructions to facilitate a mechanism to perform one or more operations comprising: detecting a wearable area, wherein the wearable area represents a human body part of a primary user; scanning the wearable area to facilitate suitability of the wearable area for projection of a virtual wearable; and projecting the virtual wearable on the wearable area using a primary wearable device of the primary user, wherein projecting is performed via a projector of the primary wearable device.

Example 24 includes the subject matter of Example 23, wherein detection of the wearable area is performed via a camera of capturing/sensing components of the primary wearable device, and wherein the projection of the virtual wearable is performed via a projector of the primary wearable device, wherein the primary wearable device includes a head-mounted display (HMD) being worn by the primary user.

Example 25 includes the subject matter of Example 23, wherein the one or more operations further comprise creating a three-dimension (3D) model of the wearable area to facilitate a 3D-based projection of the virtual wearable on the wearable area.

Example 26 includes the subject matter of Example 23, wherein the one or more operations further comprise: performing adjustment of the wearable area to remedy unevenness of a surface of the wearable area, wherein the unevenness is caused by one or more factors including contours, curves, shapes, forms, edges, jumps, and bumps on the surface; and activating the 3D model of the wearable area and the projector of the primary wearable device to project the virtual wearable to fit the confines of the wearable area.

Example 27 includes the subject matter of Example 23, wherein the one or more operations further comprise: identifying an interaction of the primary user with the virtual wearable; and recognizing the interaction of the primary user, wherein recognizing further includes recognizing one or more features of the primary user or the primary wearable device, wherein the primary user is facilitated access to the virtual wearable in response to the identification and recognition of the interaction.

Example 28 includes the subject matter of Example 23, wherein the one or more operations further comprise detecting a secondary wearable device associated with a second user to allow the secondary wearable device to access the primary virtual wearable at the wearable area.

Example 29 includes the subject matter of Example 23 or 28, wherein the one or more operations further comprise: authenticating at least one of the secondary user and the secondary wearable device; and forming, based on the authentication, permission details relating to the secondary user or the secondary wearable device, wherein the permission details include a notification identifying a grant or denial of permission to access the virtual wearable.

Example 30 includes the subject matter of Example 23 or 29, wherein the one or more operations further comprise: facilitating communication between the first and second wearable devices if the permission to access is granted, wherein the second wearable device is allowed to access the virtual wearable within the wearable area; and declining the communication between the first and second wearable devices if the permission to access is denied.

Some embodiments pertain to Example 31 includes an apparatus comprising: means for detecting a wearable area, wherein the wearable area represents a human body part of a primary user; means for scanning the wearable area to facilitate suitability of the wearable area for projection of a virtual wearable; and means for projecting the virtual wearable on the wearable area using a primary wearable device of the primary user, wherein projecting is performed via a projector of the primary wearable device.

Example 32 includes the subject matter of Example 31, wherein detection of the wearable area is performed via a camera of capturing/sensing components of the primary wearable device, and wherein the projection of the virtual wearable is performed via a projector of the primary wearable device, wherein the primary wearable device includes a head-mounted display (HMD) being worn by the primary user.

Example 33 includes the subject matter of Example 31, further comprising means for creating a three-dimension (3D) model of the wearable area to facilitate a 3D-based projection of the virtual wearable on the wearable area.

Example 34 includes the subject matter of Example 31, further comprising: means for performing adjustment of the wearable area to remedy unevenness of a surface of the wearable area, wherein the unevenness is caused by one or more factors including contours, curves, shapes, forms, edges, jumps, and bumps on the surface; and means for activating the 3D model of the wearable area and the projector of the primary wearable device to project the virtual wearable to fit the confines of the wearable area.

Example 35 includes the subject matter of Example 31, further comprising: means for identifying an interaction of the primary user with the virtual wearable; and means for recognizing the interaction of the primary user, wherein recognizing further includes recognizing one or more features of the primary user or the primary wearable device, wherein the primary user is facilitated access to the virtual wearable in response to the identification and recognition of the interaction.

Example 36 includes the subject matter of Example 31, further comprising means for detecting a secondary wearable device associated with a second user to allow the secondary wearable device to access the primary virtual wearable at the wearable area.

Example 37 includes the subject matter of Example 36, further comprising: means for authenticating at least one of the secondary user and the secondary wearable device; and means for forming, based on the authentication, permission details relating to the secondary user or the secondary wearable device, wherein the permission details include a notification identifying a grant or denial of permission to access the virtual wearable.

Example 38 includes the subject matter of Example 37, further comprising: means for facilitating communication between the first and second wearable devices if the permission to access is granted, wherein the second wearable device is allowed to access the virtual wearable within the wearable area; and means for declining the communication between the first and second wearable devices if the permission to access is denied.

Example 39 includes at least one non-transitory or tangible machine-readable medium comprising a plurality of instructions, when executed on a computing device, to implement or perform a method as claimed in any of claims or examples 9-16.

Example 40 includes at least one machine-readable medium comprising a plurality of instructions, when executed on a computing device, to implement or perform a method as claimed in any of claims or examples 9-16.

Example 41 includes a system comprising a mechanism to implement or perform a method as claimed in any of claims 9-16.

Example 42 includes an apparatus comprising means for performing a method as claimed in any of claims 9-16.

Example 43 includes a computing device arranged to implement or perform a method as claimed in any of claims 9-16.

Example 44 includes a communications device arranged to implement or perform a method as claimed in any of claims 9-16.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

## Claims

1. An apparatus for use in a wearable device (100) to dynamically enable virtual wearables, the wearable device being a primary wearable device of a primary user, the apparatus comprising:
detection/reception logic components (201) to detect a wearable area, wherein the wearable area represents a human body part of a primary user (671A), and to detect a secondary wearable device (673) associated with a secondary user (671B);
area scanning/tracking logic components (205) to scan the wearable area (653) to enable suitability of the wearable area for projection of a virtual wearable (651);
area-based model creation logic (205) to create a three-dimensional, 3D, model of the wearable area for displaying the virtual wearable on the wearable area, wherein the 3D model is to be communicated to a server computer;
communication/compatibility logic components (213) to project the virtual wearable (651) on the wearable area (653) using the primary wearable device, wherein projecting is performed via a projector of the primary wearable device;
authentication/permission logic components (203) to authenticate at least one of the secondary user and the secondary wearable device;
wherein based on the authentication, the communication/compatibility logic components (213) are further to:
query (365) the server computer about permission details indicating whether the secondary user is to be granted access to the virtual wearable;
receive (370) the permission details and the 3D model from the server computer, wherein the permission details comprise a notification identifying a grant or denial of permission to access the virtual wearable by the second wearable device; and
project (375) the virtual wearable based on the 3D model on the wearable area if the notification identifies a grant of access to the virtual wearable such that the secondary user can access the virtual wearable at the wearable area through the secondary wearable device.

2. The apparatus of claim 1, wherein detection of the wearable area is performed via a camera of capturing/sensing components of the primary wearable device, and wherein the projection of the virtual wearable is performed via a projector of the primary wearable device, wherein the primary wearable device includes a head-mounted display, HMD, being worn by the primary user.

3. The apparatus of claim 1, further comprising at least one of:
area-based model creation logic components to create a three-dimension, 3D, model of the wearable area to instruct the communication/compatibility logic components to enable a 3D-based projection of the virtual wearable on the wearable area; and/or
adjustment/activation logic components to perform adjustment of the wearable area to remedy unevenness of a surface of the wearable area, wherein the unevenness is caused by one or more factors including contours, curves, shapes, forms, edges, jumps, and bumps on the surface, wherein the adjustment/activation logic components are further to activate the 3D model of the wearable area and the projector of the primary wearable device to project the virtual wearable to fit the confines of the wearable area.

4. The apparatus of claim 1 or 3, further comprising interaction and recognition logic components to at least one of:
identify an interaction of the primary user with the virtual wearable; and/or
recognize the interaction of the primary user, wherein recognizing further includes recognizing one or more features of the primary user or the primary wearable device, wherein the primary user is enabled access to the virtual wearable in response to the identification and recognition of the interaction.

5. The apparatus of claim 1, wherein the communication/compatibility logic components are further to
enable communication between the primary and secondary wearable devices if the permission to access is granted, wherein the second wearable device is allowed to access the virtual wearable within the wearable area, and/or
decline the communication between the primary and secondary wearable devices if the permission to access is denied.

6. A method for dynamically enabling virtual wearables, comprising:
detecting a wearable area, using a primary wearable device of a primary user, wherein the wearable area represents a human body part of a primary user;
scanning (305) the wearable area, using the primary wearable device, to enable suitability of the wearable area for projection of a virtual wearable;
creating (310), using the primary wearable device, a three-dimensional, 3D, model of the wearable area for displaying the virtual wearable on the wearable area, wherein the 3D model is stored in a server computer;
projecting the virtual wearable on the wearable area, using the primary wearable device, wherein projecting is performed via a projector of the primary wearable device;
detecting (355), using the primary wearable device, a secondary wearable device associated with a secondary user;
authenticating, using the primary wearable device, at least one of the secondary user and the secondary wearable device;
querying (365), using the primary device, the server computer about permission details indicating whether the secondary user is to be granted access to the virtual wearable associated with the primary user and the primary device;
receiving (370), by the primary device, the permission details and the 3D model from the server computer, wherein the permission details comprise a notification identifying a grant or denial of permission to access the virtual wearable by the second wearable device; and
projecting (375), using the primary device, the virtual wearable based on the 3D model on the wearable area if the notification identifies a grant of access to the virtual wearable such that the secondary user can access the virtual wearable at the wearable area through the secondary wearable device.

7. The method of claim 6, wherein detection of the wearable area is performed via a camera of capturing/sensing components of the primary wearable device, and wherein the projection of the virtual wearable is performed via a projector of the primary wearable device, wherein the primary wearable device includes a head-mounted display, HMD, being worn by the primary user.

8. The method of claim 6, further comprises:
performing adjustment of the wearable area, using the primary wearable device, to remedy unevenness of a surface of the wearable area, wherein the unevenness is caused by one or more factors including contours, curves, shapes, forms, edges, jumps, and bumps on the surface.

9. The method of claim 6 or 8, further comprising at least one of:
identifying, using the primary wearable device, an interaction of the primary user with the virtual wearable; and/or
recognizing, using the primary wearable device, the interaction of the primary user, wherein recognizing further includes recognizing one or more features of the primary user or the primary wearable device, wherein the primary user is enabled access to the virtual wearable in response to the identification and recognition of the interaction.

10. The method of claim 6 or 9, further comprising at least one of:
enabling communication between the primary and secondary wearable devices if the permission to access is granted; and/or
declining the communication between the primary and secondary wearable devices if the permission details indicate a denial of permission to access the virtual wearable at the wearable area by the second wearable device.

11. At least one machine-readable medium comprising a plurality of instructions, which, when executed on a computing device, cause the computing device to implement or perform a method as claimed in any one of claims 6 to 10.

12. A wearable device comprising an apparatus as claimed in any one of claims 1 to 5.

13. A system comprising:
a first wearable device according to claim 12;
a second wearable device; and
a server computer.

## Patentansprüche

1. Vorrichtung zur Verwendung in einem Wearable-Gerät (100) zum dynamischen Aktivieren virtueller Wearables, wobei das Wearable-Gerät ein primäres Wearable-Gerät eines primären Benutzers ist, wobei die Vorrichtung aufweist:
Detektions-/Empfangslogikkomponenten (201) zum Detektieren eines Wearable-Bereichs, wobei der Wearable-Bereich ein menschliches Körperteil eines primären Benutzers (671A) darstellt, und zum Detektieren eines sekundären Wearable-Geräts (673), das einem sekundären Benutzer (671B) zugeordnet ist;
Bereichsabtastungs-/Verfolgungslogikkomponenten (205) zum Abtasten des Wearable-Bereichs (653) zum Ermöglichen der Eignung des Wearable-Bereichs zur Projektion eines virtuellen Wearables (651);
Logik (205) für bereichsbasierte Modellerzeugung zum Erzeugen eines dreidimensionalen, 3D, Modells des Wearable-Bereichs zum Anzeigen des virtuellen Wearables auf dem Wearable-Bereich, wobei das 3D-Modell an einen Server-Computer zu übermitteln ist;
Kommunikations-/Kompatibilitätslogikkomponenten (213) zum Projizieren des virtuellen Wearables (651) auf den Wearable-Bereich (653) unter Verwendung des primären Wearable-Geräts, wobei das Projizieren mittels eines Projektors des primären Wearable-Geräts durchgeführt wird;
Authentifizierungs-/Genehmigungslogikkomponenten (203) zum Authentifizieren des sekundären Benutzers und/oder des sekundären Wearable-Geräts;
wobei auf Grundlage der Authentifizierung die Kommunikations-/Kompatibilitätslogikkomponenten (213) ferner dafür vorgesehen sind:
den Server-Computer nach Genehmigungsdetails abzufragen (365), die angeben, ob dem sekundären Benutzer Zugriff auf das virtuelle Wearable zu gewähren ist;
die Genehmigungsdetails und das 3D-Modell von dem Server-Computer zu empfangen (370), wobei die Genehmigungsdetails eine Benachrichtigung umfassen, die eine Gewährung oder Verweigerung der Genehmigung zum Zugreifen auf das virtuelle Wearable durch das zweite Wearable-Gerät identifiziert; und
das virtuelle Wearable auf Grundlage des 3D-Modells auf den Wearable-Bereich zu projizieren (375), wenn die Benachrichtigung eine Gewährung des Zugriffs auf das virtuelle Wearable identifiziert, sodass der sekundäre Benutzer auf das virtuelle Wearable am Wearable-Bereich durch das sekundäre Wearable-Gerät zugreifen kann.

2. Vorrichtung nach Anspruch 1, wobei die Detektion des Wearable-Bereichs mittels einer Kamera aus Aufnahme-/Erfassungskomponenten des primären Wearable-Geräts durchgeführt wird und wobei die Projektion des virtuellen Wearables mittels eines Projektors des primären Wearable-Geräts durchgeführt wird, wobei das primäre Wearable-Gerät ein Head-Mounted Display, HMD, umfasst, das von dem primären Benutzer getragen wird.

3. Vorrichtung nach Anspruch 1, die ferner mindestens eine der folgenden Komponenten aufweist:
Logikkomponenten für bereichsbasierte Modellerzeugung zum Erzeugen eines dreidimensionalen, 3D, Modells des Wearable-Bereichs zum Anweisen der Kommunikations-/Kompatibilitätslogikkomponenten, eine 3D-basierte Projektion des virtuellen Wearables auf den Wearable-Bereich zu aktivieren; und/oder
Anpassungs-/Aktivierungslogikkomponenten zum Durchführen einer Anpassung des Wearable-Bereichs zum Beseitigen von Unebenheit einer Oberfläche des Wearable-Bereichs, wobei die Unebenheit durch einen oder mehrere Faktoren verursacht wird, die Konturen, Kurven, Gestalten, Formen, Kanten, Sprünge und Erhebungen auf der Oberfläche umfassen, wobei die Anpassungs-/Aktivierungslogikkomponenten ferner dafür vorgesehen sind, das 3D-Modell des Wearable-Bereichs und den Projektor des primären Wearable-Geräts zu aktivieren, um das virtuelle Wearable so zu projizieren, dass es zu den Abgrenzungen des Wearable-Bereichs passt.

4. Vorrichtung nach Anspruch 1 oder 3, die ferner Interaktions- und Erkennungslogikkomponenten für mindestens eine der folgenden Aktionen aufweist:
Identifizieren einer Interaktion des primären Benutzers mit dem virtuellen Wearable; und/oder
Erkennen der Interaktion des primären Benutzers, wobei das Erkennen ferner das Erkennen eines oder mehrerer Merkmale des primären Benutzers oder des primären Wearable-Geräts umfasst,
wobei dem primären Benutzer als Reaktion auf die Identifizierung und Erkennung der Interaktion der Zugriff auf das virtuelle Wearable ermöglicht wird.

5. Vorrichtung nach Anspruch 1, wobei die Kommunikations-/Kompatibilitätslogikkomponenten ferner dafür vorgesehen sind,
Kommunikation zwischen dem primären und dem sekundären Wearable-Gerät zu ermöglichen, wenn die Genehmigung zum Zugreifen gewährt wird, wobei das zweite Wearable-Gerät auf das virtuelle Wearable in dem Wearable-Bereich zugreifen darf, und/oder
die Kommunikation zwischen dem primären und dem sekundären Wearable-Gerät abzulehnen, wenn die Genehmigung zum Zugreifen verweigert wird.

6. Verfahren zum dynamischen Aktivieren virtueller Wearables, das umfasst:
Detektieren eines Wearable-Bereichs unter Verwendung eines primären Wearable-Geräts eines primären Benutzers, wobei der Wearable-Bereich ein menschliches Körperteil eines primären Benutzers darstellt;
Abtasten (305) des Wearable-Bereichs unter Verwendung des primären Wearable-Geräts zum Ermöglichen der Eignung des Wearable-Bereichs zur Projektion eines virtuellen Wearables;
Erzeugen (310) eines dreidimensionalen, 3D, Modells des Wearable-Bereichs zum Anzeigen des virtuellen Wearables auf dem Wearable-Bereich unter Verwendung des primären Wearable-Geräts, wobei das 3D-Modell in einem Server-Computer gespeichert ist;
Projizieren des virtuellen Wearables auf den Wearable-Bereich unter Verwendung des primären Wearable-Geräts, wobei das Projizieren mittels eines Projektors des primären Wearable-Geräts durchgeführt wird;
Detektieren (355) eines sekundären Wearable-Geräts, das einem sekundären Benutzer zugeordnet ist, unter Verwendung des primären Wearable-Geräts;
Authentifizieren des sekundären Benutzers und/oder des sekundären Wearable-Geräts unter Verwendung des primären Wearable-Geräts;
Abfragen (365) des Server-Computers nach Genehmigungsdetails, die angeben, ob dem sekundären Benutzer Zugriff auf das virtuelle Wearable, das dem primären Benutzer und dem primären Gerät zugeordnet ist, zu gewähren ist, unter Verwendung des primären Geräts;
Empfangen (370) der Genehmigungsdetails und des 3D-Modells von dem Server-Computer durch das primäre Gerät, wobei die Genehmigungsdetails eine Benachrichtigung umfassen, die eine Gewährung oder Verweigerung der Genehmigung zum Zugreifen auf das virtuelle Wearable durch das zweite Wearable-Gerät identifiziert; und
Projizieren (375) des virtuellen Wearables auf Grundlage des 3D-Modells auf den Wearable-Bereich unter Verwendung des primären Geräts, wenn die Benachrichtigung eine Gewährung des Zugriffs auf das virtuelle Wearable identifiziert, sodass der sekundäre Benutzer auf das virtuelle Wearable am Wearable-Bereich durch das sekundäre Wearable-Gerät zugreifen kann.

7. Verfahren nach Anspruch 6, wobei die Detektion des Wearable-Bereichs mittels einer Kamera aus Aufnahme-/Erfassungskomponenten des primären Wearable-Geräts durchgeführt wird und wobei die Projektion des virtuellen Wearables mittels eines Projektors des primären Wearable-Geräts durchgeführt wird, wobei das primäre Wearable-Gerät ein Head-Mounted Display, HMD, umfasst, das von dem primären Benutzer getragen wird.

8. Verfahren nach Anspruch 6, das ferner umfasst:
Durchführen einer Anpassung des Wearable-Bereichs unter Verwendung des primären Wearable-Geräts zum Beseitigen von Unebenheit einer Oberfläche des Wearable-Bereichs, wobei die Unebenheit durch einen oder mehrere Faktoren verursacht wird, die Konturen, Kurven, Gestalten, Formen, Kanten, Sprünge und Erhebungen auf der Oberfläche umfassen.

9. Verfahren nach Anspruch 6 oder 8, das ferner mindestens eine der folgenden Aktionen umfasst:
Identifizieren einer Interaktion des primären Benutzers mit dem virtuellen Wearable unter Verwendung des primären Wearable-Geräts; und/oder
Erkennen der Interaktion des primären Benutzers unter Verwendung des primären Wearable-Geräts, wobei das Erkennen ferner das Erkennen eines oder mehrerer Merkmale des primären Benutzers oder des primären Wearable-Geräts umfasst, wobei dem primären Benutzer als Reaktion auf die Identifizierung und Erkennung der Interaktion der Zugriff auf das virtuelle Wearable ermöglicht wird.

10. Verfahren nach Anspruch 6 oder 9, das ferner mindestens eine der folgenden Aktionen umfasst:
Ermöglichen von Kommunikation zwischen dem primären und dem sekundären Wearable-Gerät, wenn die Genehmigung zum Zugreifen gewährt wird; und/oder
Ablehnen der Kommunikation zwischen dem primären und dem sekundären Wearable-Gerät, wenn die Genehmigungsdetails eine Verweigerung der Genehmigung zum Zugreifen auf das virtuelle Wearable am Wearable-Bereich durch das zweite Wearable-Gerät angeben.

11. Mindestens ein maschinenlesbares Medium, das eine Mehrzahl von Anweisungen aufweist, die bei Ausführung auf einem Rechengerät bewirken, dass das Rechengerät ein Verfahren nach einem der Ansprüche 6 bis 10 implementiert oder durchführt.

12. Wearable-Gerät, das eine Vorrichtung nach einem der Ansprüche 1 bis 5 aufweist;

13. System, das aufweist:
ein erstes Wearable-Gerät nach Anspruch 12;
ein zweites Wearable-Gerät; und
einen Server-Computer.

## Revendications

1. Appareil à utiliser dans un dispositif portable (100) pour activer dynamiquement des éléments portables virtuels, le dispositif portable étant un dispositif portable principal d'un utilisateur principal, l'appareil comprenant :
des composants logiques de détection/réception (201) pour détecter une zone portable, la zone portable représentant une partie du corps humain d'un utilisateur principal (671A), et pour détecter un dispositif portable secondaire (673) associé à un utilisateur secondaire (671B) ;
des composants logiques de balayage/suivi de zone (205) pour balayer la zone portable (653) pour activer l'aptitude de la zone portable à la projection d'un élément portable virtuel (651) ;
une logique de création de modèle basé sur une zone (205) pour créer un modèle tridimensionnel, 3D, de la zone portable en vue d'afficher l'élément portable virtuel sur la zone portable, le modèle 3D devant être communiqué à un ordinateur serveur ;
des composants logiques de communication/ compatibilité (213) pour projeter l'élément portable virtuel (651) sur la zone portable (653) en utilisant le dispositif portable principal, la projection étant réalisée par le biais d'un projecteur du dispositif portable principal ;
des composants logiques d'authentification/permission (203) pour authentifier l'utilisateur secondaire et/ou le dispositif portable secondaire ;
dans lequel, sur la base de l'authentification, les composants logiques de communication/compatibilité (213) servent également à :
interroger (365) l'ordinateur serveur sur des détails de permission indiquant si l'utilisateur secondaire doit se voir accorder l'accès à l'élément portable virtuel ;
recevoir (370) les détails de permission et le modèle 3D depuis l'ordinateur serveur, les détails de permission comprenant une notification identifiant un accord ou un refus de permission d'accès à l'élément portable virtuel par le deuxième dispositif portable ; et
projeter (375) l'élément portable virtuel sur la base du modèle 3D sur la zone portable si la notification identifie un accord d'accès à l'élément portable virtuel de telle sorte que l'utilisateur secondaire peut accéder à l'élément portable virtuel au niveau de la zone portable par le dispositif portable secondaire.

2. Appareil de la revendication 1, dans lequel la détection de la zone portable est réalisée par le biais d'une caméra de composants de capture/détection du dispositif portable principal, et dans lequel la projection de l'élément portable virtuel est réalisée par le biais d'un projecteur du dispositif portable principal, le dispositif portable principal comportant un dispositif d'affichage monté sur la tête, HMD, porté par l'utilisateur principal.

3. Appareil de la revendication 1, comprenant en outre :
des composants logiques de création de modèle basé sur une zone pour créer un modèle tridimensionnel, 3D, de la zone portable pour donner l'instruction aux composants logiques de communication/compatibilité d'activer une projection 3D de l'élément portable virtuel sur la zone portable ; et/ou
des composants logiques d'ajustement/activation pour réaliser l'ajustement de la zone portable pour remédier à l'irrégularité d'une surface de la zone portable, l'irrégularité étant provoquée par un ou plusieurs facteurs incluant des contours, des courbes, des silhouettes, des formes, des bords, des sauts et des bosses sur la surface, les composants logiques d'ajustement/activation servant également à activer le modèle 3D de la zone portable et le projecteur du dispositif portable principal pour projeter l'élément portable virtuel pour qu'il s'ajuste aux limites de la zone portable.

4. Appareil de la revendication 1 ou 3, comprenant en outre des composants logiques d'interaction et reconnaissance pour :
identifier une interaction de l'utilisateur principal avec l'élément portable virtuel ; et/ou
reconnaître l'interaction de l'utilisateur principal, la reconnaissance comportant en outre la reconnaissance d'une ou plusieurs caractéristiques de l'utilisateur principal ou du dispositif portable principal, l'utilisateur principal se voyant autoriser l'accès à l'élément portable virtuel en réponse à l'identification et la reconnaissance de l'interaction.

5. Appareil de la revendication 1, dans lequel les composants logiques de communication/compatibilité servent également à
activer la communication entre les dispositifs portables principal et secondaire si la permission d'accès est accordée, le deuxième dispositif portable étant autorisé à accéder à l'élément portable virtuel à l'intérieur de la zone portable, et/ou
refuser la communication entre les dispositifs portables principal et secondaire si la permission d'accès est refusée.

6. Procédé destiné à activer dynamiquement des éléments portables virtuels, comprenant :
la détection d'une zone portable, au moyen d'un dispositif portable principal d'un utilisateur principal, la zone portable représentant une partie du corps humain d'un utilisateur principal ;
le balayage (305) de la zone portable, au moyen du dispositif portable principal, pour activer l'aptitude de la zone portable à la projection d'un élément portable virtuel ;
la création (310), au moyen du dispositif portable principal, d'un modèle tridimensionnel, 3D, de la zone portable en vue d'afficher l'élément portable virtuel sur la zone portable, le modèle 3D étant stocké dans un ordinateur serveur ;
la projection de l'élément portable virtuel sur la zone portable, au moyen du dispositif portable principal, la projection étant réalisée par le biais d'un projecteur du dispositif portable principal ;
la détection (355), au moyen du dispositif portable principal, d'un dispositif portable secondaire associé à un utilisateur secondaire ;
l'authentification, au moyen du dispositif portable principal, de l'utilisateur secondaire et/ou du dispositif portable secondaire ;
l'interrogation (365), au moyen du dispositif principal, de l'ordinateur serveur sur des détails de permission indiquant si l'utilisateur secondaire doit se voir accorder l'accès à l'élément portable virtuel associé à l'utilisateur principal et au dispositif principal ;
la réception (370), par le dispositif principal, des détails de permission et du modèle 3D depuis l'ordinateur serveur, les détails de permission comprenant une notification identifiant un accord ou un refus de permission d'accès à l'élément portable virtuel par le deuxième dispositif portable ; et
la projection (375), au moyen du dispositif principal, de l'élément portable virtuel sur la base du modèle 3D sur la zone portable si la notification identifie un accord d'accès à l'élément portable virtuel de telle sorte que l'utilisateur secondaire peut accéder à l'élément portable virtuel au niveau de la zone portable par le dispositif portable secondaire.

7. Procédé de la revendication 6, dans lequel la détection de la zone portable est réalisée par le biais d'une caméra de composants de capture/détection du dispositif portable principal, et dans lequel la projection de l'élément portable virtuel est réalisée par le biais d'un projecteur du dispositif portable principal, le dispositif portable principal comportant un dispositif d'affichage monté sur la tête, HMD, porté par l'utilisateur principal.

8. Procédé de la revendication 6, comprenant en outre :
la réalisation d'un ajustement de la zone portable, au moyen du dispositif portable principal, pour remédier à l'irrégularité d'une surface de la zone portable, l'irrégularité étant provoquée par un ou plusieurs facteurs incluant des contours, des courbes, des silhouettes, des formes, des bords, des sauts et des bosses sur la surface.

9. Procédé de la revendication 6 ou 8, comprenant en outre :
l'identification, au moyen du dispositif portable principal, d'une interaction de l'utilisateur principal avec l'élément portable virtuel ; et/ou
la reconnaissance, au moyen du dispositif portable principal, de l'interaction de l'utilisateur principal, la reconnaissance comportant en outre la reconnaissance d'une ou plusieurs caractéristiques de l'utilisateur principal ou du dispositif portable principal, l'utilisateur principal se voyant autoriser l'accès à l'élément portable virtuel en réponse à l'identification et la reconnaissance de l'interaction.

10. Procédé de la revendication 6 ou 9, comprenant en outre :
l'activation de la communication entre les dispositifs portables principal et secondaire si la permission d'accès est accordée ; et/ou
le refus de la communication entre les dispositifs portables principal et secondaire si les détails de permission indiquent un refus de permission d'accès à l'élément portable virtuel au niveau de la zone portable par le deuxième dispositif portable.

11. Au moins un support lisible par machine comprenant une pluralité d'instructions qui, lorsqu'elles sont exécutées sur un dispositif informatique, conduisent le dispositif informatique à mettre en œuvre ou réaliser un procédé selon l'une quelconque des revendications 6 à 10.

12. Dispositif portable comprenant un appareil selon l'une quelconque des revendications 1 à 5.

13. Système comprenant :
un premier dispositif portable selon la revendication 12 ;
un deuxième dispositif portable ; et
un ordinateur serveur.
